# FASCICULE DE BREVET EUROPEEN

(11) **EP 3 317 140 B1**
(45) Date de publication et mention de la délivrance du brevet: **08.04.2020**
(21) Numéro de dépôt: 16732648.7
(22) Date de dépôt: 28.06.2016
(51) Int. Cl.: B60N 2/015, B64D 11/06

(54) **ATTACHE DE SIEGE D'AÉRONEF MUNIE D'UN SYSTEME DE DÉBRAYAGE DU PLONGEUR**
FLUGZEUGSITZBEFESTIGUNG MIT EINEM SYSTEM ZUR FREIGABE DES KOLBENS
AIRCRAFT SEAT ATTACHMENT PROVIDED WITH A SYSTEM FOR RELEASING THE PLUNGER

(30) Priorité: 30.06.2015 FR 1556137
(43) Date de publication de la demande: 09.05.2018
(73) Titulaire: Zodiac Seats France, 36100 Issoudun (FR)
(72) Inventeur: MARAIS, Rémy, 36100 Issoudun (FR); BERNARDO DE MORAIS, José, 36100 Issoudun (FR)
(74) Mandataire: Marconnet, Sébastien
(86) Numéro de dépôt international: PCT/EP2016/065007
(87) Numéro de publication internationale: WO 2017/001400

(56) Documents cités:
- WO-A1-2012/100152
- DE-A1- 19 812 490
- DE-A1-102012 205 167
- US-A- 2 899 167

## Description

La présente invention porte sur une attache de siège d'aéronef munie d'un système de débrayage du plongeur.

De façon connue en soi, les sièges passagers d'avions civils sont généralement montés sur un rail constitué par un profilé présentant une lèvre supérieure sur laquelle l'attache du siège est serrée. Cette lèvre est usinée pour permettre l'insertion de la partie inférieure de l'attache.

Un siège est généralement fixé sur le rail au moyen de trois attaches au minimum, typiquement quatre, deux à l'avant du siège et deux à l'arrière. L'attache de siège doit assurer deux fonctions principales à savoir le serrage de l'attache sur la lèvre du rail pour éviter tout mouvement, et pour les attaches arrière, le transfert des charges longitudinales en cas de crash par exemple, du siège vers le rail.

L'attache comprend à cet effet des tétons destinés à être positionnés sous la lèvre du rail. Les tétons étant fixes, l'attache comprend un plongeur mobile verticalement par rapport au corps de l'attache pour permettre un serrage du rail entre les tétons et le plongeur. Les attaches avec plongeur munies d'un ressort de rappel ne permettent pas de faire glisser le siège jusqu'à sa station. En effet, de telles attaches se crantent dès les premiers trous de rail. Par ailleurs, les attaches à plongeur par vis obligent lors du vissage à une opération de mise en place dans le tour du rail. Un exemple qui divulgue le préambule de la revendication 1 est montré dans le document WO 2012/100152 A1.

L'invention vise à remédier efficacement à ces inconvénients en proposant une attache de siège d'aéronef selon la revendication 1.

L'invention permet ainsi d'amener le siège à sa station sans outil extérieur, de venir ensuite libérer de façon automatique les plongeurs au moyen du système de débrayage, de les serrer avec un couple prédéfini, puis de vérifier de façon visuelle que le système est bien en place pour s'affranchir d'un "faux verrouillage". Le cycle de montage et démontage est en outre simplifié, dans la mesure où le passage de la position de montage à la position de démontage ne nécessite qu'un simple dévissage.

Selon l'invention, ledit système de débrayage comporte une bague montée mobile en translation par rapport audit corps, ladite bague coopérant par l'intermédiaire d'une liaison hélicoïdale avec une vis sur laquelle est monté ledit plongeur.

Selon une réalisation, ledit plongeur est monté sur une portion d'extrémité de ladite vis et vient en contact contre une butée portée par ladite vis.

Selon l'invention, ledit plongeur est mobile entre une position de repos dans laquelle ledit plongeur est en retrait par rapport audit rail et une position active dans laquelle ledit plongeur est en appui contre la lèvre dudit rail.

Selon l'invention, au moins un organe élastique est monté comprimé entre ledit plongeur et ledit corps lorsque ledit plongeur est en position de repos.

Selon une réalisation, ladite attache de siège comporte deux organes élastiques constitués par deux ressorts positionnés de part et d'autre de ladite vis à l'intérieur de logements ménagés chacun en partie dans ledit plongeur et en partie dans ledit corps.

Selon l'invention, un organe de verrouillage est apte à faire passer ladite bague:
- d'un état verrouillé dans lequel ledit organe de verrouillage bloque un déplacement de ladite bague par rapport audit corps,
- à un état déverrouillé dans lequel ledit organe de verrouillage autorise un déplacement de ladite bague par rapport audit corps pour faire passer automatiquement ledit plongeur de la position de repos à ladite position active suite à une décompression dudit organe élastique.

Selon une réalisation, ladite bague comporte une butée destinée à venir en contact avec le corps suite à un vissage de ladite vis effectué après le passage de ladite bague dans un état déverrouillé. Cela permet de contrôler l'effort de serrage appliqué sur le rail.

Selon une réalisation, ledit organe de verrouillage est constitué par une came montée mobile en rotation par rapport audit corps entre une première position angulaire, dite position de verrouillage, dans laquelle ladite came coopère avec une gorge de forme correspondante réalisée dans ladite bague, et une deuxième position angulaire, dite position de déverrouillage, dans laquelle ladite came est dégagée de ladite gorge ménagée dans la bague.

Selon une réalisation, le passage d'une position à l'autre de ladite came est apte à être effectué au moyen d'un dispositif de manœuvre.

Selon une réalisation, ledit dispositif de manœuvre est constitué par un clip ressort ayant chacune de ses extrémités coopérant avec une rainure correspondante ménagée dans une face de ladite came.

Selon une réalisation, ledit clip ressort est mobile entre une position de butée avant correspondant à ladite position de verrouillage dudit organe de verrouillage et une position de butée arrière correspondant à ladite position de déverrouillage dudit organe de verrouillage.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- Les figures 1 et 2 montrent respectivement des vues en perspective et en perspective éclatée d'une attache selon la présente invention;
- Les figures 3a à 3g illustrent les différentes étapes de montage de l'attache de siège selon la présente invention;
- Les figures 4a et 4b illustrent les étapes de démontage de l'attache de siège selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

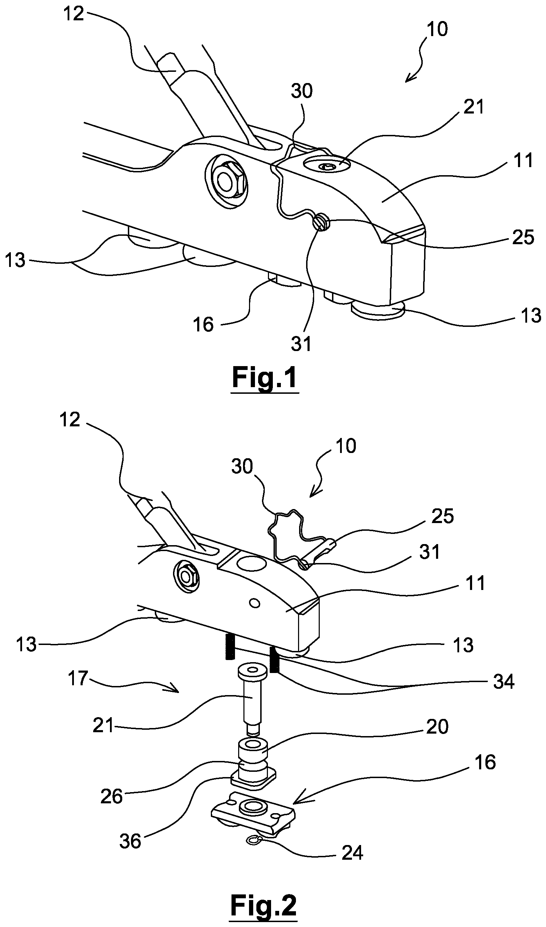

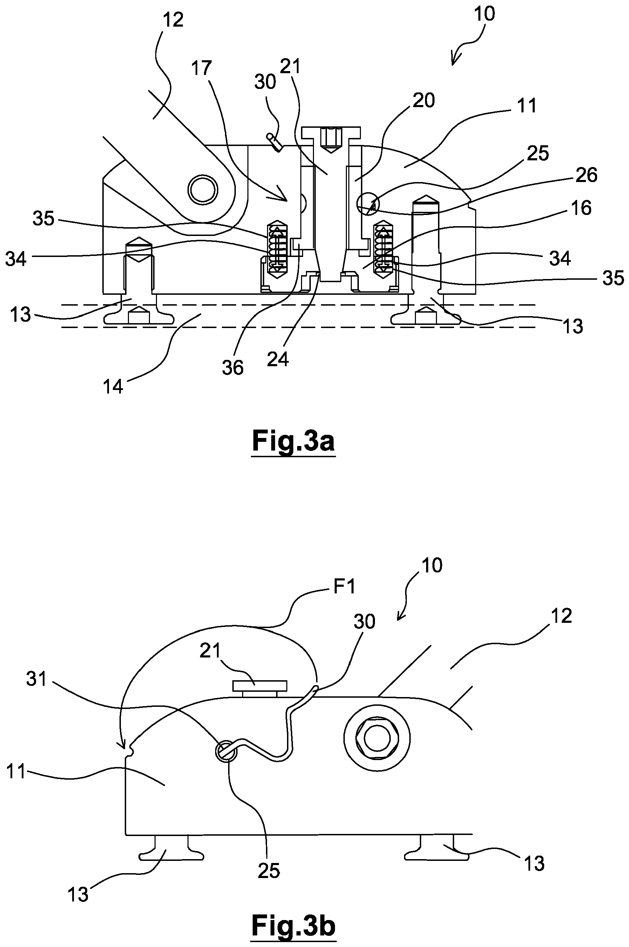

Les figures 1 et 2 montre une vue en perspective d'une attache 10 munie d'un corps 11 fixé à un pied de siège 12 d'aéronef et de tétons 13 solidaires du corps 11 destinés à venir en contact contre une face inférieure d'une lèvre d'un rail 14 montré sur la figure 3a.

Un plongeur 16 mobile en translation par rapport au corps 11 permet d'assurer la fixation de l'attache 10 sur un rail 14 d'aéronef par serrage du rail 14 entre les tétons 13 et le plongeur 16.

Comme cela est visible sur la figure 2, l'attache 10 intègre un système de débrayage 17 du plongeur 16 muni d'une bague 20 montée mobile en translation par rapport au corps 11. La bague 20 coopère par l'intermédiaire d'une liaison hélicoïdale avec une vis 21 sur laquelle est monté le plongeur 16. La bague 20 est bloquée en rotation par rapport au corps 11 et est mobile en translation par rapport au corps 11.

Le plongeur 16 est lié en translation avec la vis 21 et est mobile entre une position de repos dans laquelle le plongeur 16 est en retrait par rapport au rail 14 et une position active dans laquelle le plongeur 16 est en appui contre la lèvre du rail 14. En l'occurrence, le plongeur 16 est monté sur une portion d'extrémité de la vis 21 de forme tronconique et vient en contact contre une butée 24 portée par la vis 21. La butée 24 pourra être constituée par exemple par un anneau élastique inséré dans une rainure réalisée en périphérie externe de la vis 21.

Un organe de verrouillage 25 est apte à faire passer la bague 20 d'un état verrouillé dans lequel l'organe 25 bloque le déplacement de la bague 20 par rapport au corps 11 à un état déverrouillé dans lequel l'organe 25 autorise le déplacement de la bague 20 par rapport au corps 11 notamment pour faire passer le plongeur 16 de la position de repos à la position active.

A cet effet, l'organe de verrouillage 25 est constitué par exemple par une came montée mobile en rotation par rapport au corps 11 entre une première position angulaire, dite position de verrouillage, dans laquelle la came 25 coopère avec une gorge 26 de forme correspondante réalisée dans la bague 20, et une deuxième position angulaire, dite position de déverrouillage, dans laquelle la came 25 est dégagée de la gorge 26 ménagée dans la bague 20. La came 25 pourra par exemple prendre la forme d'une pièce de forme cylindrique munie d'un méplat à sa périphérie externe.

Le passage d'une position à l'autre de la came 25 est effectué au moyen d'un dispositif de manœuvre 30 constitué par exemple par un clip ressort ayant chacune de ses extrémités coopérant avec une rainure 31 correspondante ménagée dans une face d'extrémité de la came 25. Le clip ressort 30 est mobile entre une position de butée avant correspondant à la position de verrouillage de la came 25 et une position de butée arrière correspondant à la position de déverrouillage de la came 25. On précise que, comme cela ressort des figures, le côté arrière est dirigé vers le pied de siège 12 tandis que le côté avant est dirigé du côté opposé.

Au moins un organe élastique 34 est monté comprimé entre le plongeur 16 et le corps 11 lorsque le plongeur 16 est en position de repos. En l'occurrence, on utilise deux organes élastiques 34 constitués par des ressorts positionnés de part et d'autre de la vis 21 à l'intérieur de logements 35 ménagés chacun en partie dans le plongeur 16 et en partie dans le corps 11.

On décrit ci-après en référence avec les figures 3a à 3g le montage de l'attache 10 selon la présente invention sur un rail 14 d'aéronef.

Comme cela est illustré par la figure 3a, lorsque le plongeur est dans la position repos, le siège peut être installé dans les rails 14 et glisser librement à l'intérieur de ceux-ci. Les ressorts 34 sollicitent le plongeur 16 vers le bas. Grâce à la came 25 qui se trouve dans l'état verrouillé et bloque donc la bague 20 en translation (le clip ressort 30 est alors en butée avant), toutes les pièces restent en position haute en sorte que le plongeur 16 reste en position de repos.

Lorsque le siège est située à la position du rail 14 souhaitée par l'opérateur, ce dernier tourne le clip ressort 30 jusqu'à sa butée arrière suivant la flèche F1, tel que montré sur la figure 3b.

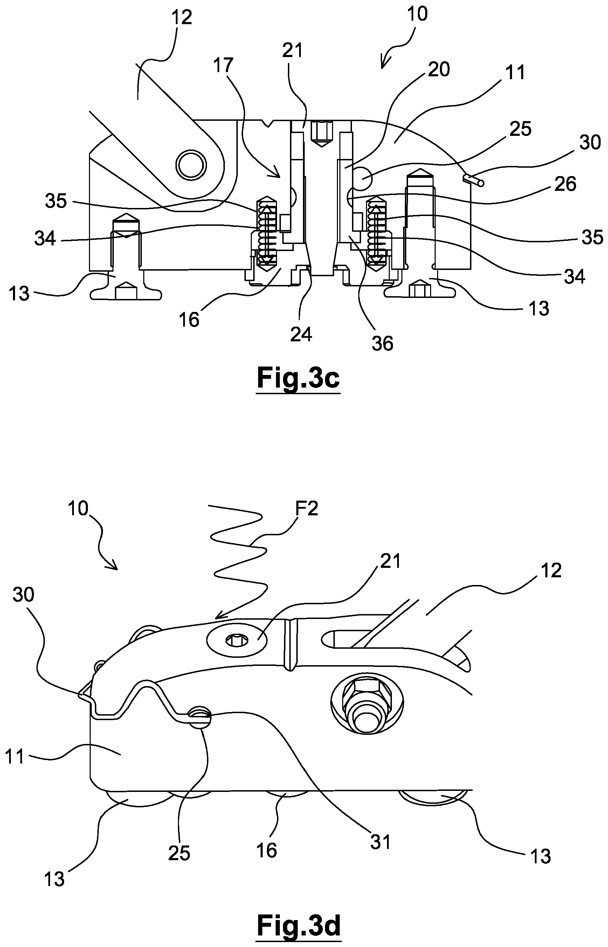

Comme cela est illustré par la figure 3c, la rotation du clip ressort 30 fait tourner la came 25 de manière à la faire passer dans un état déverrouillé. Dans cette position, la came 25 libère la bague 20 en translation. Du fait de l'action des ressorts 34 qui se décompriment, le plongeur 16 passe de la position de repos à la position active. Après la libération automatique du plongeur 16, l'opérateur s'assure que les protubérances du plongeur 16 pénètrent à l'intérieur de trous correspondants du rail 14.

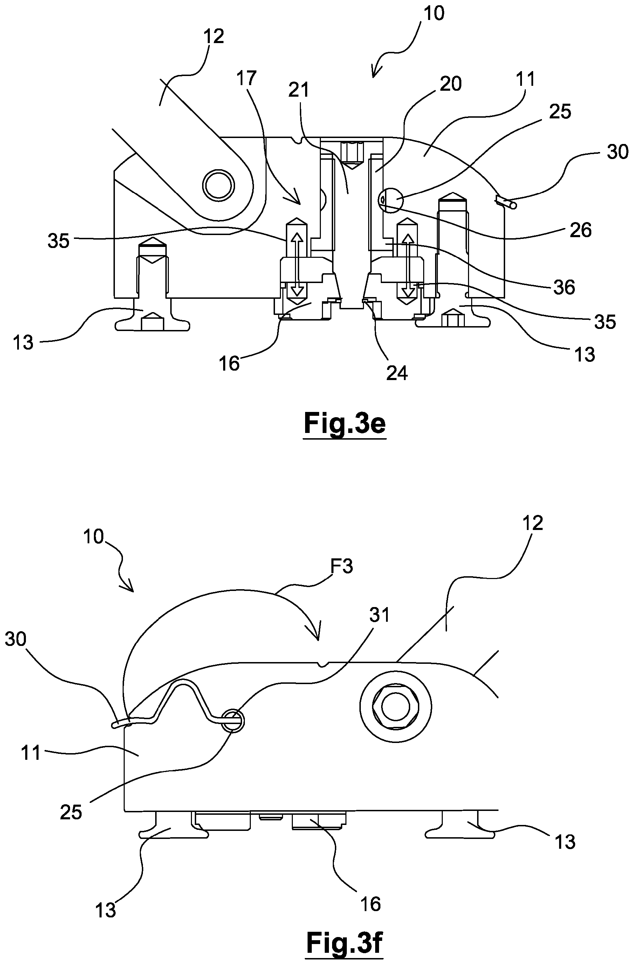

Comme cela est illustré par la figure 3d, la vis 21 est ensuite vissée par l'opérateur suivant la flèche F2 au couple prédéfini. Comme cela est illustré par la figure 3e, lors du vissage de la vis 21, la bague 20 (bloquée en rotation par le corps 11) remonte dans la direction opposée au rail 14. Lorsque la bague 20 entre au contact vertical avec un épaulement du corps 11 via la butée 36, le rail 14 est alors serré entre le plongeur 16 et les tétons 13. La butée 36 pourra par exemple être constituée par une collerette s'étendant vers l'extérieur depuis une périphérie externe de la bague 20. La mise en butée de la bague 20 contre l'épaulement du corps 11 permet de contrôler l'effort de serrage de l'attache 10 sur le rail 14.

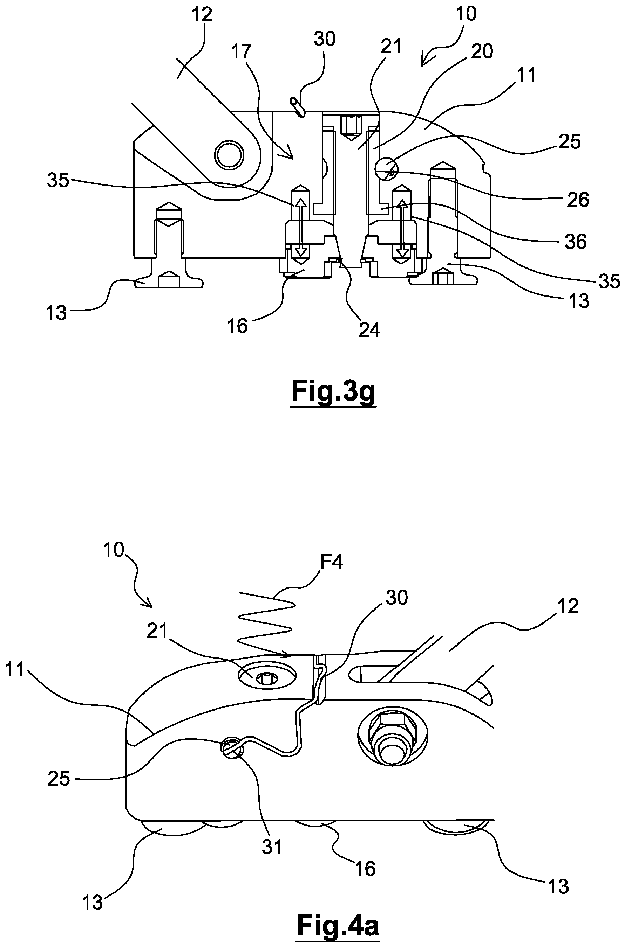

Comme cela est illustré par la figure 3f, le clip ressort 30 est ensuite tourné jusqu'à sa butée avant suivant la flèche F3. Comme cela est illustré par la figure 3g, la came 25 passe alors dans la position verrouillée pour sécuriser la bonne position de l'attache 10.

Il est à noter que l'opérateur dispose d'un indicateur visuel de l'état serré de l'attache 10. En effet, l'attache 10 est considérée comme convenablement installée si le clip ressort 30 est en position avant et si la tête de la vis 21 est enfoncée dans le corps 11. Dans le cas où une de ces deux conditions n'est pas vérifiée, cela signifie que l'attache 10 n'a pas été convenablement installée sur le rail 14 correspondant.

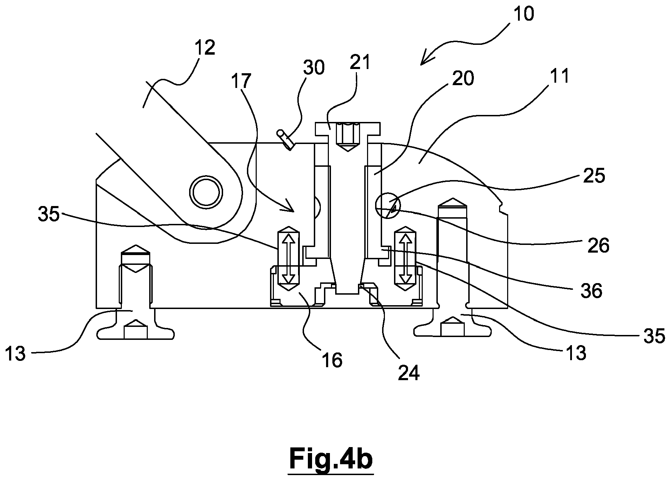

On décrit ci-après en référence avec les figures 4a et 4b le démontage de l'attache 10 de siège selon la présente invention.

Comme cela est illustré par la figure 4a, l'opérateur dévisse la vis 21 suivant la flèche F4.

Comme cela est illustré par la figure 4b, la bague 20 étant bloquée en translation par la came 25, cela a pour effet de faire remonter la vis 21 avec le plongeur 16. Lorsque le plongeur 16 vient en butée avec la bague 20, le plongeur 16 revient en position de repos tandis que les ressorts 34 reviennent à leur état comprimé.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Attache de siège d'aéronef (10) comportant:
- un corps (11) fixé à un pied de siège d'aéronef (12),
- au moins un téton (13) solidaire dudit corps (11), et
- un plongeur (16) monté mobile en translation par rapport audit corps (11) de manière à assurer une fixation de ladite attache de siège (10) sur un rail (14) par serrage d'une lèvre dudit rail (14) entre ledit téton (13) et ledit plongeur (16), ledit plongeur (16) étant mobile entre une position de repos et une position active,
**caractérisée en ce que** ladite attache de siège (10) intègre un système de débrayage (17) dudit plongeur (16) ledit système de débrayage comportant:
- une bague (20) montée mobile en translation par rapport audit corps (11), ladite bague (20) coopérant par l'intermédiaire d'une liaison hélicoïdale avec une vis (21) sur laquelle est monté ledit plongeur (16),
et au moins un organe élastique (34) monté comprimé entre ledit plongeur (16) et ledit corps (11) lorsque ledit plongeur (16) est en position de repos,
et **en ce qu'**un organe de verrouillage (25) est apte à faire passer la bague:
- d'un état verrouillé dans lequel ledit organe de verrouillage (25) bloque un déplacement de ladite bague (20) par rapport audit corps (11),
- à un état déverrouillé dans lequel ledit organe de verrouillage (25) autorise un déplacement de ladite bague (20) par rapport audit corps (11) pour faire passer automatiquement ledit plongeur (16) de la position de repos à ladite position active suite à une décompression dudit organe élastique (34).

2. Attache de siège (10) selon la revendication 1, **caractérisée en ce que** ledit plongeur (16) est monté sur une portion d'extrémité de ladite vis (21) et vient en contact contre une butée (24) portée par ladite vis (21).

3. Attache de siège (10) selon la revendication 1 ou 2, **caractérisée en ce que** ledit plongeur (16) est mobile entre une position de repos dans laquelle ledit plongeur (16) est en retrait par rapport audit rail (14) et une position active dans laquelle ledit plongeur (16) est en appui contre la lèvre dudit rail (14).

4. Attache de siège (10) selon l'une quelconque des revendications 1 à 3, **caractérisée en ce qu'**elle comporte deux organes élastiques (34) constitués par deux ressorts (34) positionnés de part et d'autre de ladite vis (21) à l'intérieur de logements (35) ménagés chacun en partie dans ledit plongeur (16) et en partie dans ledit corps (11).

5. Attache de siège (10) selon l'une quelconque des revendications 1 à 4, **caractérisée en ce que** ladite bague (20) comporte une butée (36) destinée à venir en contact avec le corps (11) suite à un vissage de ladite vis (21) effectué après le passage de ladite bague (20) dans un état déverrouillé.

6. Attache de siège (10) selon l'une quelconque des revendications 1 à 5, **caractérisée en ce que** ledit organe de verrouillage (25) est constitué par une came (25) montée mobile en rotation par rapport audit corps (11) entre une première position angulaire, dite position de verrouillage, dans laquelle ladite came (25) coopère avec une gorge (26) de forme correspondante réalisée dans ladite bague (20), et une deuxième position angulaire, dite position de déverrouillage, dans laquelle ladite came (25) est dégagée de ladite gorge (26) ménagée dans la bague (20).

7. Attache de siège (10) selon la revendication 6, **caractérisée en ce que** le passage d'une position à l'autre de ladite came (25) est apte à être effectué au moyen d'un dispositif de manœuvre (30).

8. Attache de siège (10) selon la revendication 7, **caractérisée en ce que** ledit dispositif de manœuvre (30) est constitué par un clip ressort (30) ayant chacune de ses extrémités coopérant avec une rainure (31) correspondante ménagée dans une face de ladite came (25).

9. Attache de siège (10) selon la revendication 8, **caractérisée en ce que** ledit clip ressort (30) est mobile entre une position de butée avant correspondant à ladite position de verrouillage dudit organe de verrouillage (25) et une position de butée arrière correspondant à ladite position de déverrouillage dudit organe de verrouillage (25).

## Patentansprüche

1. Flugzeugsitzbefestigungselement (10), umfassend:
- einen Körper (11), der an einem Flugzeugsitzbein (12) befestigt ist,
- mindestens einen Ansatz (13), der mit dem Körper (11) befestigt ist, und
- einen Plunger (16), der so montiert ist, dass er sich relativ zu dem Körper (11) verschiebt, um das Sitzbefestigungselement (10) an einer Schiene (14) zu befestigen, indem eine Lippe der Schiene (14) zwischen dem Ansatz (13) und dem Plunger (16) gespannt wird, wobei der Plunger (16) zwischen einer Ruheposition und einer aktiven Position beweglich ist,
**dadurch gekennzeichnet, dass** das Sitzbefestigungselement (10) ein Ausrücksystem (17) für den Plunger (16) umfasst, wobei das Ausrücksystem umfasst:
- einen Ring (20), der so montiert ist, dass er sich relativ zu dem Körper (11) verschiebt, wobei der Ring (20) mittels einer spiralförmigen Verbindung mit einer Schraube (21) zusammenwirkt, an der der Plunger (16) montiert ist;
und mindestens ein elastisches Element (34), das so montiert ist, dass es zwischen dem Plunger (16) und dem Körper (11) zusammengedrückt wird, wenn sich der Plunger (16) in der Ruheposition befindet,
und dass ein Verriegelungselement (25) den Ring übertragen kann:
- aus einem verriegelten Zustand, in dem das Verriegelungselement (25) eine Bewegung des Rings (20) relativ zu dem Körper (11) blockiert,
- in einen entriegelten Zustand, in dem das Verriegelungselement (25) eine Bewegung des Rings (20) relativ zu dem Körper (11) zulässt, um den Plunger (16) aufgrund von einer Dekompression des elastischen Elements (34) von der Ruheposition in die aktive Position automatisch zu übertragen.

2. Sitzbefestigungselement (10) nach Anspruch 1, **dadurch gekennzeichnet, dass** der Plunger (16) an einem Endabschnitt der Schraube (21) montiert ist und sich auf einen Anschlag (24) an der Schraube (21) stützt.

3. Sitzbefestigungselement (10) nach Anspruch 1 oder 2, **dadurch gekennzeichnet, dass** der Plunger (16) zwischen einer Ruheposition, in der der Plunger (16) relativ zur Schiene (14) zurücksteht, und einer aktiven Position, in der sich der Plunger (16) auf der Lippe der Schiene (14) stützt, beweglich ist.

4. Sitzbefestigungselement (10) nach einem der Ansprüche 1 bis 3, **dadurch gekennzeichnet, dass** es zwei elastische Elemente (34) umfasst, die aus zwei Federn (34) bestehen, die auf jeder Seite der Schraube (21) jeweils in Aufnahmen (35) teilweise in dem Plunger (16) und teilweise in dem Körper (11) positioniert sind.

5. Sitzbefestigungselement (10) nach einem der Ansprüche 1 bis 4, **gekennzeichnet dadurch, dass** der Ring (20) einen Anschlag (36) zum Kontakt mit dem Körper (11) aufweist, wenn die Schraubverbindung der Schraube (21) nach der Übertragung des Rings (20) in einen entriegelten Zustand durchgeführt ist.

6. Sitzbefestigungselement (10) nach einem der Ansprüche 1 bis 5, **gekennzeichnet dadurch, dass** das Verriegelungselement (25) aus einem Nocken (25) besteht, der so montiert ist, dass er relativ zu dem Körper (11) zwischen einer ersten Winkelposition, sogenannter Verriegelungsposition, in der der Nocken (25) mit einer Nut (26) entsprechender Form in dem Ring (20) zusammenwirkt, und einer zweiten Winkelposition, sogenannter Entriegelungsposition, in der der Nocken (25) von der Nut (26) im Ring (20) frei ist, drehbeweglich ist.

7. Sitzbefestigungselement (10) nach Anspruch 6, **dadurch gekennzeichnet, dass** die Übertragung des Nockens (25) von einer Position in die andere mittels einer Betätigungsvorrichtung (30) erfolgen kann.

8. Sitzbefestigungselement (10) nach Anspruch 7, **dadurch gekennzeichnet, dass** die Betätigungsvorrichtung (30) aus einem Federclip (30) besteht, wobei jedes seiner Enden mit einer entsprechenden Nut (31) in einer Seite des Nockens (25) zusammenwirkt.

9. Sitzbefestigungselement (10) nach Anspruch 8, **dadurch gekennzeichnet, dass** sich der Federclip (30) zwischen einer vorderen, der Verriegelungsposition des Verriegelungselements (25) entsprechenden Anschlagposition und einer hinteren, der Entriegelungsposition des Verriegelungselements (25) entsprechenden Anschlagposition beweglich ist.

## Claims

1. An aircraft seat fastener (10) comprising:
- a body (11) fixed to an aircraft seat leg (12),
- at least one stud (13) integral with said body (11), and
- a plunger (16) mounted so as to translate relative to said body (11) in order to secure said seat fastener (10) to a rail (14) by tightening a lip of said rail (14) between said stud (13) and said plunger (16), said plunger (16) being movable between a rest position and an active position,
**characterized in that** said seat fastener (10) incorporates a disengaging system (17) for said plunger (16), said disengaging system comprising:
- a ring (20) mounted so as to translate relative to said body (11), said ring (20) cooperating by means of a helical connection with a screw (21) on which said plunger (16) is mounted,
and at least one elastic member (34) mounted so as to be compressed between said plunger (16) and said body (11) when said plunger (16) is in the rest position,
and **in that** a locking member (25) can transfer the ring:
- from a locked state in which said locking member (25) blocks a movement of said ring (20) relative to said body (11),
- into an unlocked state in which said locking member (25) authorizes a movement of said ring (20) relative to said body (11) in order to automatically move said plunger (16) from the rest position to said active position due to a decompression of said elastic member (34).

2. The seat fastener (10) according to claim 1, **characterized in that** said plunger (16) is mounted on an end portion of said screw (21) and comes into contact against a stop (24) carried by said screw (21).

3. The seat fastener (10) according to claim 1 or 2, **characterized in that** said plunger (16) is movable between a rest position in which said plunger (16) stands back relative to said rail (14) and an active position in which said plunger (16) rests on the lip of said rail (14).

4. The seat fastener (10) according to any one of the claims 1 to 3, **characterized in that** it comprises two elastic members (34) formed by two springs (34) positioned on either side of said screw (21) inside housings (35) made partly in said plunger (16) and partly in said body (11).

5. The seat fastener (10) according to any one of the claims 1 to 4, **characterized in that** said ring (20) comprises a stop (36) for coming into contact with the body (11) when said screw (21) is screwed after the transfer of said ring (20) into an unlocked state.

6. The seat fastener (10) according to any one of the claims 1 to 5, **characterized in that** said locking member (25) is formed by a cam (25) mounted so as to rotate relative to said body (11) between a first angular position, so-called the locking position, in which said cam (25) cooperates with a groove (26) of corresponding shape in said ring (20), and a second angular position, so-called unlocking position, in which said cam (25) is disengaged from said groove (26) in the ring (20).

7. The seat fastener (10) according to claim 6, **characterized in that** the transfer from one position to the other of said cam (25) can be carried out by means of an operating device (30).

8. The seat fastener (10) according to claim 7, **characterized in that** said operating device (30) is formed by a spring clip (30), each of its ends cooperating with a corresponding groove (31) in one face of said cam (25).

9. The seat fastener (10) according to claim 8, **characterized in that** said spring clip (30) can move between a front stop position corresponding to said locking position of said locking member (25) and a rear stop position corresponding to said unlocking position of said locking member (25).
